# EUROPEAN PATENT APPLICATION

(11) **EP 3 812 574 A1**
(43) Date of publication of application: **28.04.2021**
(21) Application number: 19205371.8
(22) Date of filing: 25.10.2019
(51) Int. Cl.: F02M 55/02, B33Y 80/00

(54) **FUEL RAIL ASSEMBLY FOR AN INTERNAL COMBUSTION ENGINE**

(71) Applicant: Vitesco Technologies GmbH, 30165 Hannover (DE)
(72) Inventor: Serra, Giandomenico - c/o Continental Automotive GmbH, 81737 München (DE); Di Domizio, Gisella - c/o Continental Automotive GmbH, 81737 München (DE)

(57) **Abstract**

A fuel rail assembly for a fuel injection system for an internal combustion engine is provided. The assembly comprises a fuel rail (2) in the form of an elongate generally tubular body having an exterior wall (4) forming an interior volume which forms a fuel reservoir (6). The fuel rail (2) has one or more outlet ports (10) which each incorporate an injector cup (12) for receiving a fuel injector. The injector cup(s) (12) being formed partially or completely within a recess in the exterior wall (4) of the fuel rail (2) so as to project into the reservoir (6).

## Description

The present disclosure relates to a fuel rail assembly for an internal combustion engine and particularly, but not exclusively, to a fuel rail assembly for a multi-cylinder gasoline direct injection engine.

A fuel rail assembly typically comprises an elongate main gallery having a volume which forms a fuel reservoir. Fuel is supplied at high-pressure, for example 200 bar or higher, into the fuel rail reservoir by a fuel pump. Spaced along the fuel rail are a plurality of fuel delivery outlets for hydraulically coupling the reservoir to the individual fuel injectors which are operable to inject fuel into the engine.

Such fuel rail assemblies are typically designed according to the engine packaging and design of the specific internal combustion engine for which the assembly is required. As a result, the design of the fuel rail assembly may be specific to a particular engine and the vehicle in which the engine is installed and may not be suitable for other engines.

An example of a fuel rail assembly is disclosed in EP 2 466 111 B. This specification discloses a mounting structure for mounting connections for each fuel injector in the form of an injector cup to the main gallery and for securing the injector cup to the main gallery. A fastening arrangement is disclosed for securing the fuel rail to an engine and to secure the fastening arrangement to the injector cup. The fastening arrangement is spaced from the fuel rail, so that concentration of stresses due to relative displacements between the parts is distributed through the various components. The mounting structure and the fastening arrangement are formed of complex bodies typically formed by forging, stamping, pressing or machining from solid which processes require complex tooling and machining requirements to ensure the accuracy of the components for easy assembly.

Such constructions are inevitably very costly and time consuming to manufacture and to assemble ready for installation in a vehicle. Additionally, the fuel rail assembly takes up a relatively large amount of space in the confined space of an engine bay of a vehicle. It may be the case that other components in the engine bay have to be redesigned or moved to accommodate such a fuel rail assembly, which inevitably increases cost. A further constraint on the positioning of the fuel rail assembly is determined by the position of the engine since the fuel rail assembly should be as close as possible to the engine inlet ports.

The present disclosure seeks to provide a fuel rail assembly which occupies less space.

According to the present disclosure, there is provided a fuel rail assembly for a fuel injection system for an internal combustion engine. The assembly comprises a fuel rail in the form of an elongate generally tubular body having an exterior wall forming an interior volume which forms a fuel reservoir. The fuel rail has one or more outlet ports which each incorporate an injector cup for receiving a fuel injector. The injector cup(s) being formed partially or completely within a recess in the exterior wall of the fuel rail so as to project into the fuel reservoir.

The recess and injector cup, therefore, project into the fuel reservoir. Since the injector cup for the or each outlet port is formed partially or completely within the recess in the exterior wall of the fuel rail, the injector cup(s) are located partly or substantially entirely within the overall profile of the fuel rail. Thus the overall space occupied by the fuel rail assembly is reduced, for example reduced over an arrangement in which the injector cups are attached to the outer surface of the fuel rail.

In some embodiments, the recess and the injector cup is formed by the exterior wall of the fuel rail. The fuel reservoir may consequently have a cross-sectional area that is asymmetric about a longitudinal axis of the tubular body, since part of the fuel reservoir, as defined by the overall tubular profile of the body, is occupied by the recess and injector cup.

In some embodiments, the recess is sized and shaped to provide an injector cup for receiving a fuel injector. The inner surface of the recess may have a cup-type shape and be sized and shaped to provide an injector cup for receiving a fuel injector.

In some embodiments, the exterior wall of the fuel rail is shaped to form the recess, the recess projecting into the interior volume forming the fuel reservoir. The exterior wall of the fuel rail may in regions between the recesses extend substantially parallel to the axis of the fuel rail to form the elongate tubular body. The exterior wall may then extend towards the axis of the fuel rail to form the side wall of the recess and parallel to the axis of the fuel rail to form the base of the recess. The recess bounded by the outer surface of the exterior wall may be cylindrical in order to form a cup suitable for a fuel injector. The recess can be considered to be an indentation formed in the outer surface of the fuel rail.

In an embodiment, the injector cup or cups are each formed by shaping the wall of the fuel rail into a recess projecting into the fuel reservoir. The injector cup or cups are integrally formed by the shape of the exterior wall and positioned within the overall profile of the elongate tubular body.

The thickness of the wall forming the recess and the thickness of the wall adjacent the recess may be similar or vary. For example, the thickness of the wall may be increased to provide extra strength at stressed regions, for example at the corners between the side wall and the base of the recess. The outer surface of the exterior wall of the fuel rail forms the inner surface of the recess which forms the seal with the fuel injector.

The recess may have one or more fuel outlets providing fluid communication between the reservoir and the injector cup and, consequently, the fuel injector when located in the injector cup.

In an embodiment, the fuel rail assembly is adapted for use with a direct injection multi-cylinder engine and has a plurality of outlet ports spaced along the length of the fuel rail, one for each cylinder of the engine.

In another embodiment, the recess includes an open end that is formed to have a profile, for example chamfered, to facilitate insertion of the fuel injector into the injector cup.

The fuel rail has an elongate generally tubular body having a longitudinal axis and the recess and injector cup has an axis. The axis of the injector cup may extend perpendicularly to the longitudinal axis of the fuel rail or at an inclined angle to the longitudinal axis of the fuel rail. If two or more recesses and injector cups are provided, the axes may have the same or different angular relationship with respect to the longitudinal axis of the fuel rail. The angular relationship between the axes of the recess/injector cup and the fuel rail may be selected depending on the design of the engine and/or space available.

In an embodiment, at least one mounting bracket is provided. A mounting bracket may be located adjacent the or each outlet port. The mounting bracket(s) are used to the fuel rail assembly to an engine.

In an embodiment, the inner surface of the exterior wall of the recess that projects into the reservoir is shaped to influence movement and/or pressure oscillations of fuel in the reservoir. For example, the inner surface of the wall may be curved to avoid creating turbulence in the fuel in the reservoir.

The disclosure further illustrates a method of manufacturing a fuel rail assembly of the type referred to, using additive manufacturing technology.

Additive manufacturing techniques may be used to build up the fuel rail including the membrane or membranes layer by layer. For example, the elongate fuel rail including the membrane with its orifice(s) may be built up layer by layer, for example using 3D (Three-dimensional) printing or Powder Bed Fusion or Directed Energy Deposition. The fuel rail may be built up layer by layer by movement of the metal jet print head, laser or electron beam controlled according to a three dimensional model of the fuel rail.

In some embodiments, the fuel rail assembly including the elongate fuel rail with integral injector cup provided by the recess and further components such as a port for a sensor and/or mounting bracket(s) may be built up layer by layer using 3D (Three-dimensional) printing or Powder Bed Fusion or Directed Energy Deposition.

The use of additive manufacturing allows the production of forms, in the present case the fuel rail or fuel rail assembly with integral injector cups positioned partially or completely within the overall profile of the fuel rail, which are difficult or expensive to form using traditional technologies. Due to the greater freedom in the distribution of the material, the amount of material used to fabricate the fuel rail may be reduced. This can be used to reduce the weight of the fuel rail. Additionally, due to the greater freedom in the distribution of the material, a better stress distribution can be provided so that material can be omitted in regions that are not subject to higher stresses in use. Material can also be added, for example the thickness can be increased, in regions that are subjected to higher stresses in use.

Embodiment of the present disclosure will now be described by way of example with reference to the accompanying drawings, in which:-
Figure 1 shows a side view and a plan view of a fuel rail assembly,
Figure 2 shows a cross-sectional area of the part of the fuel rail indicated within the detail A of Figure 1 to an enlarged scale, and
Figure 3 illustrates an isometric view of the fuel rail assembly of Figure 1.

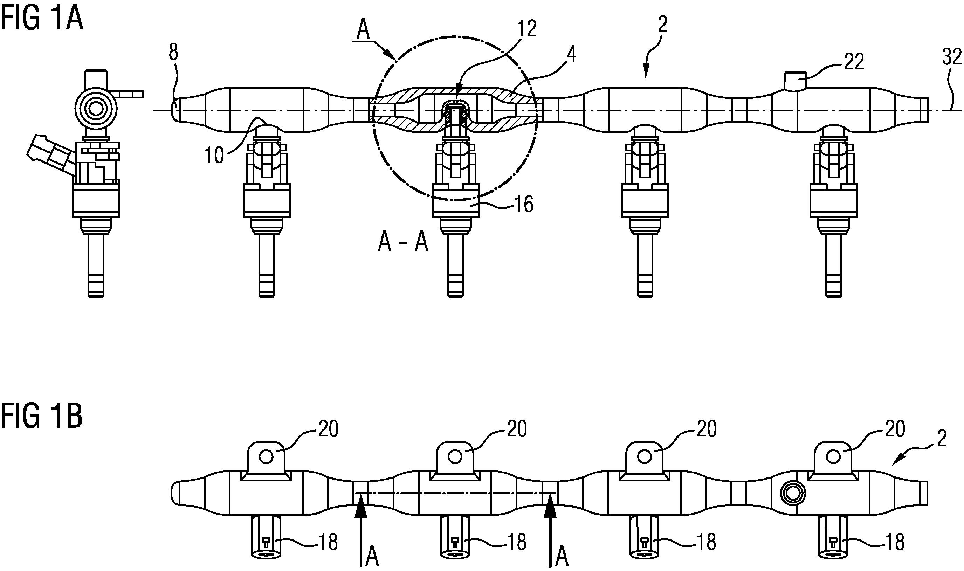

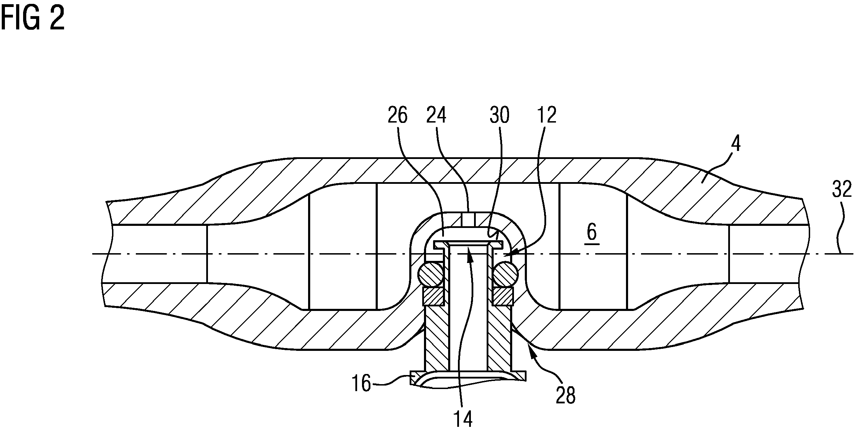

Referring now to Figure 1 there is shown two views of a fuel rail assembly for a four-cylinder direct injection gasoline internal combustion engine. The upper view, Figure 1A, is a side view of the assembly with a detail, reference A, being shown in cross section. Figure 2 shows an enlarged view of the detail A. The lower view, Figure 1B, shows a plan view of 1A.

As shown in Figures 1 and 2, the fuel rail assembly has a fuel rail 2, also known as a main gallery, which comprises an elongate tubular member having a peripheral wall 4 defining an interior volume forming a fuel reservoir 6. The fuel rail 2 is typically formed of a metal such as stainless steel but may alternatively be formed of a synthetic plastics material. Fuel is supplied to the reservoir through an inlet port 8 by a high-pressure pump (not shown). The fuel rail 2 has four outlet ports 10, one for each cylinder of the engine. However, fewer or more than four outlet ports may be provided depending on the number of cylinders of the engine.

Each outlet port 10 provides a fluid communication to an injector cup 12 adapted to receive a fuel inlet of a fuel injector 16 to thus provide a fluid communication between the reservoir 6, the injector cup 12 and the fuel injector 16. Each fuel injector 16 has an injector connector 18 which is connected to the electronic control unit that controls the timing and volume of fuel injected by the fuel injector into the associated combustion chamber of the engine (not shown).

As shown in 1B of Figure 1, mounting brackets 20 are secured on the fuel rail 2 in the region of each of the outlet ports 10. The mounting brackets 20 serve to enable the fuel rail 2 to be secured to the engine. The fuel rail 2 also includes a sensor port 22 to which a sensor is attached to monitor characteristics of the fuel in the reservoir 6.

Figure 2 shows an enlarged view of the detail A illustrated in Figure 1A and shows a cross-sectional view of part of the fuel rail 4 and an outlet 24 providing fluid communication between the reservoir 6 and a fluid volume 26 of the injector cup. Although only one outlet 24 is illustrated, it will be understood that a plurality of such outlets may be provided disposed about the peripheral wall 4 and accessing the fuel volume 26 leading to the injector cup 12.

As shown, the injector cup 12 has a cylindrical shape formed by a recess in the peripheral wall 4 of the fuel rail2. The injector cup 12 projects into the interior volume of the fuel rail so that the injector cup 12 is formed at least partially, and preferably substantially entirely, within the overall profile of the fuel tail and within the reservoir 6 as defined by the overall profile of the peripheral wall 4 of the fuel rail 2.

The exterior wall 4 of the fuel rail 2 extends substantially parallel to the longitudinal axis 32 of the fuel rail 2 in regions between the injector cups 12 to form the elongate tubular body. The exterior wall 4 then extends towards the longitudinal axis 32 of the fuel rail 2 to form the side wall of the injector cup 12 and parallel to the longitudinal axis 32 of the fuel rail 2 to form the base of the injector cup 12. The injector cup 12 is bounded by the outer surface of the exterior wall 4 and may be cylindrical in order to form a cup suitable for a fuel injector.

The recesses and injector cups 12 are formed in the exterior surface of the exterior wall 4 as part of the manufacture of the wall 4 and may be integral with the exterior wall 4. In order to ensure a satisfactory fit of the fuel injector 16 and to minimise the risks of fuel leaking to the exterior between the exterior wall 4 and the fuel injector 16, the surface of the exterior wall 4 that defines the inner surface of the injector cup 12 is finished to a very precise dimension and finish. Since the recess forming the injector cup 12 is formed in the outer side of the wall 4 of the fuel rail and is accessible from the outside of the fuel rail 2, it is relatively easy to carry out a finishing operation on the surface of the injector cup 12 such as by polishing or honing.

The open end 28 of the recess forming the injector cup 12 which receives the fuel injector 16 lies on the exterior surface of the peripheral wall 4 and is profiled, for example chamfered, to facilitate insertion of the fuel injector into the cylindrical part of the injector cup recess which defines the injector cup 12.

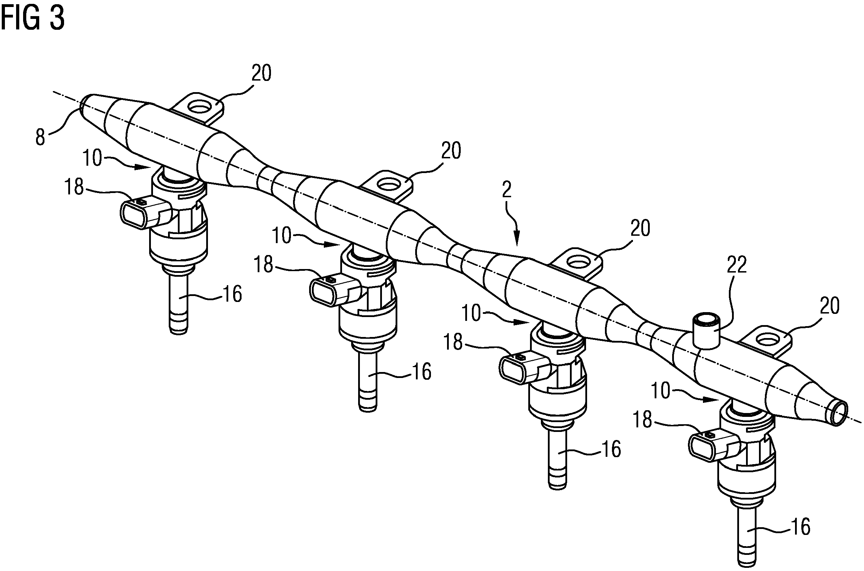

Referring now to Figure 3, there is shown an isometric view of the fuel rail 2 which illustrates the compact design and how the fuel rail 2 can be mounted directly onto and thus very close to the engine by means of the mounting brackets 20. This compactness offers significant advantages as it minimises the space needed for the fuel rail assembly in the engine bay of a vehicle.

The recess may be formed in the fuel rail 2, after the tubular body is formed, by mechanical deformation of the wall of the fuel rail 2 but this has practical disadvantages since the wall may be weakened in what is a high stress area. The whole wall could have to be made thicker and heavier to cope with this stress.

In order to reduce the weight of the fuel assembly, the disclosure also provides methods in which the fuel rail assembly is manufactured by an additive manufacturing technology. The injector cup 12 can be manufactured so as to be integrally formed with the fuel rail and different parts of the wall 4 may be manufactured to a desired thickness to equalise the stresses applied to the different parts of the fuel rail2 . Deformation of the wall to form the recess and injector cup can be avoided using additive manufacturing technology. In this way, there is a saving in cost of the material and the subsequent reduction in weight of the fuel rail. It is also possible for the shape of the inner surface 30 of the recess or injector cup 12 that is positioned in the volume defining the reservoir 6 to be varied to alter the shape of the interior volume along its length and/or width to influence the pressure oscillations in the reservoir 6. This technique enables the wall thickness and the shape of the interior volume to be varied throughout its length without any sudden changes in dimension which would result in stress concentration factors.

Although described as a fuel rail for a four-cylinder engine, it will be understood that the fuel rail 2 can be adapted for engines with a different number of cylinders. Also, the inclination of the injector cup axis relative to the main or longitudinal axis 32 of the fuel rail 2 can differ from the 90° angle shown and a different number and location of the mounting brackets may be provided depending upon the installation.

## Claims

1. A fuel rail assembly for a fuel injection system for an internal combustion engine, the assembly comprising a fuel rail (2) in the form of an elongate generally tubular body having an exterior wall (4) forming an interior volume which forms a fuel reservoir (6), the fuel rail having one or more outlet ports (10) which each incorporate an injector cup (12) for receiving a fuel injector (16), the injector cup(s) (12) being formed partially or completely within a recess in the exterior wall of the fuel rail so as to project into the fuel reservoir (6).

2. A fuel rail assembly according to claim 1, wherein the recess is formed by the exterior wall (4) of the body of the fuel rail (2).

3. A fuel rail assembly according to claim 1 or 2, wherein the exterior wall (4) of the body of the fuel rail (2) is shaped to form the recess and projects into the fuel reservoir (6).

4. A fuel rail assembly according to any one of the preceding claims, wherein the recess is sized and shaped to provide an injector cup (12) for receiving a fuel injector.

5. A fuel rail assembly according to any one of the preceding claims, wherein the injector cup (12) is formed by the outer surface of the exterior wall (4) that is shaped to define the recess.

6. A fuel rail assembly according to any one of the preceding claims, wherein one or more fuel outlets (24) are formed in the recess to provide fluid communication between the reservoir (6) and the injector cup (12).

7. A fuel rail assembly according to any one of the preceding claims, the recess has an open end that is chamfered to facilitate insertion of the fuel injector into the injector cup (12).

8. A fuel rail assembly according to any one of the preceding claims, wherein the fuel rail (2) has a longitudinal axis (32) and the injector cup (12) has an axis, wherein the axis of the injector cup (12) extends perpendicularly to the longitudinal axis (32) of the fuel rail (2) or at an inclined angle to the longitudinal axis (32) of the fuel rail (2).

9. A fuel rail assembly according to any one of the preceding claims, wherein the inner surface (30) of the exterior wall (4) of the recess that projects into the reservoir (6) is shaped to influence movement and/or pressure oscillations of fuel in the reservoir (6).

10. A fuel rail assembly according to any one of the preceding claims, wherein the elongate generally tubular body has a cross-sectional area that varies along the longitudinal axis (32) of the fuel rail (2).

11. A fuel rail assembly according to claim 10, wherein the exterior wall (4) of the elongate generally tubular body has an outer diameter that varies along the longitudinal axis (32) of the fuel rail (2).

12. A fuel rail assembly according to any one of the preceding claims, wherein the fuel rail assembly has a plurality of outlet ports (10) spaced along the length of the fuel rail.

13. A method of manufacturing a fuel rail assembly according to any one of the preceding claims, using additive manufacturing technology.

14. A method according to claim 13, wherein the fuel rail assembly is built up layer by layer by 3D printing or Powder Bed Fusion or Directed Energy Deposition.

15. A method according to claim 13 or claim 14, wherein the fuel rail assembly is built up layer by layer by movement of the metal jet print head, laser or electron beam controlled according to a three dimensional model of the fuel rail assembly.
